(19) Europäisches Patentamt
European Patent Office
Office européen des brevets

(11) **EP 4 517 294 A1**

(12) **EUROPEAN PATENT APPLICATION**
published in accordance with Art. 153(4) EPC

(43) Date of publication:
**05.03.2025 Bulletin 2025/10**

(21) Application number: **23835107.6**

(22) Date of filing: **09.03.2023**

(51) International Patent Classification (IPC):
**G01N 3/28** (2006.01)    **B21D 22/00** (2006.01)

(52) Cooperative Patent Classification (CPC):
**B21D 22/00; G01N 3/28**

(86) International application number:
**PCT/JP2023/009090**

(87) International publication number:
**WO 2024/009566 (11.01.2024 Gazette 2024/02)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **04.07.2022 JP 2022107543**

(71) Applicant: **JFE Steel Corporation
Tokyo 100-0011 (JP)**

(72) Inventors:
• **KARIYAZAKI, Yuta
Tokyo 100-0011 (JP)**
• **SATO, Kentaro
Tokyo 100-0011 (JP)**

(74) Representative: **Grünecker Patent- und
Rechtsanwälte
PartG mbB
Leopoldstraße 4
80802 München (DE)**

(54) **METHOD AND DEVICE FOR OBTAINING FORMING LIMIT OF METAL SHEET**

(57)    In a metal sheet forming limit acquisition method according to the present invention, a test piece 100 of a metal sheet is bulge-formed at various bending deformation degrees by utilization of a plurality of hemispherical punches 11a having different curvatures at tip portions 11a1, and a forming limit of the metal sheet which limit is represented by a relationship between a bending deformation degree of the bulge-formed test piece 100 and a maximum principal strain and a minimum principal strain of the test piece 100 bulge-formed at the bending deformation degrees is acquired.

FIG.1

**Description**

Field

The present invention relates to a metal sheet forming limit acquisition method and apparatus to acquire a forming limit of a metal sheet in consideration of a bending deformation degree of the metal sheet.

Background

A metal sheet used as a material of an automotive body is mostly processed into an automotive part by press forming. Press formability of the automotive part varies depending on a shape of the automotive part, and is also greatly affected by a material property including ductility of a metal sheet such as a steel sheet that is a material. In addition, in response to a demand for weight reduction of an automotive body in recent years, strength enhancement of a metal sheet such as a steel sheet used for an automotive part is in progress. However, as the ductility decreases along with the strength enhancement of the metal sheet, a fracture is likely to be generated in press forming, and press formability is deteriorated.

Thus, in order to avoid a trouble such as generation of the fracture during mass production of the automotive part by press forming, die design based on prior prediction of press formability by computer aided engineering (CAE) is important. Furthermore, in order to accurately perform the prior prediction of generation of a fracture in press forming, importance of a technique of accurately determining a forming limit of a metal sheet such as a steel sheet is increased.

A forming limit diagram (hereinafter, referred to as "FLD") is usually used to determine the forming limit of the metal sheet. The FLD is created by measurement of a forming limit in each of deformation forms (equibiaxial deformation, non-equibiaxial deformation, plane strain deformation, and uniaxial deformation) in press forming by a forming test on a laboratory scale. Then, in the creation of the forming limit diagram, a deformation ratio in a major axis direction and a minor axis direction of a test piece is changed by changing of a width of the test piece to some levels and a strain in each of the major axis direction and the minor axis direction at the time of generation of a fracture of the test piece is measured.

Generally, in the press forming of the metal sheet, a process in which the metal sheet is uniformly deformed transitions to a process in which strain concentrates on a specific place. In this process, a sheet thickness reduction called necking is generated at a portion where the strain of the metal sheet is concentrated, and the fracture is generated after the sheet thickness reduction proceeds. Since generation of necking causes a product defect in the press forming, it is necessary to define an amount of the strain immediately before the generation of necking in an FLD used for prior prediction of the product defect in a press formed part. Furthermore, in a high-strength steel sheet having a tensile strength exceeding 980 MPa, necking is generated at a low strain amount of about 10%, and the fracture is generated immediately thereafter. Thus, a method of accurately determining a forming limit has been proposed.

A method of acquiring a forming limit curve (hereinafter, referred to as "FLC") of a metal sheet is standardized in ISO12004 (see Non-Patent Literature 1). In this method, first, a strain distribution in the vicinity of a fracture generated portion of a test piece subjected to bulge forming up to the fracture is measured, and a maximum value of an approximation curve of the measured strain distribution is acquired as a forming limit strain.

However, in the method defined in IS12004, the strain at the fracture generated portion cannot be sufficiently approximated and the forming limit strain cannot be acquired in some cases. Thus, Non-Patent Literature 2 proposes, as a method of improving ISO12004, a method of continuously measuring a strain generated in a test piece during forming, and acquiring an FLC from a temporal change in a strain of a fracture generated portion.

In addition, Patent Literature 1 proposes a method of performing bulge forming with a punch that has a minimum curvature radius of 3 to 10 mm at a tip, measuring a maximum principal strain and a minimum principal strain at the time when a crack is generated on a surface of a metal sheet at a tip portion of the punch, and creating a forming limit diagram.

Citation List

Patent Literature

Patent Literature 1: Japanese Patent Application Laid-open No. 2012-166252

Non Patent Literature

Non Patent Literature 1: ISO 12004-2:2008, Metallic materials - Sheet and strip - Determination of forming-limit curves, 2008.
Non Patent Literature 2: W Hotz, M Merklein et al., "Time Dependent FLC Determination Comparison of Different Algorithms to Detect the Onset of Unstable Necking before Fracture", Key Engineering Materials, Vol. 549, pp. 397-404, 2013.

Summary

Technical Problem

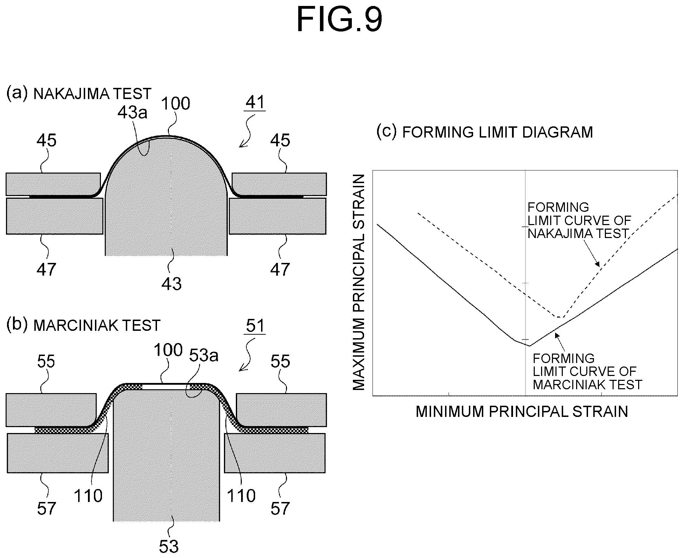

As test methods of acquiring a forming limit curve, two methods that are Nakajima test and Marciniak test are defined in ISO12004. As illustrated in FIG. 9(a), the Nakajima test is a method of acquiring a forming limit by a bulge test in which bulge forming of a test piece 100 is performed with a molding die 41 including a hemispherical punch 43, an upper die 45, and a blank holder 47. On the other hand, as illustrated in FIG. 9(b), in the Marciniak test, a molding die 51 including a flat punch 53, an upper die 55, and a blank holder 57 is used. Then, in the Marciniak test, a forming limit is acquired by a bulge test in which bulge forming of a test piece 100 is performed with a driver sheet 110 being interposed between the flat punch 53 and the test piece 100.

In the Nakajima test, bulge forming is performed in a state in which the test piece 100 is fitted to a shape of a tip portion 43a of the hemispherical punch 43. Thus, the acquired forming limits (maximum principal strain and minimum principal strain at the time of a fracture) are affected by a bending deformation of the test piece 100. On the other hand, in the Marciniak test, the bulge forming is performed with the flat punch 53 having a tip portion 53a with a flat surface. Thus, bending deformation of the test piece 100 is not caused and the acquired forming limit is not affected by the bending deformation of the test piece 100.

In addition, in general, when the FLD acquired by the Nakajima test is compared with the FLD acquired by the Marciniak test, the strain amount immediately before the generation of necking is larger in the FLD acquired by the Nakajima test by about 1 to 2% as illustrated in FIG. 9(c). In press forming of a high-strength material (such as a high-tensile steel sheet or the like) having low ductility, a slight difference in the strain amount may cause a difference in constriction (necking) generation. Thus, the forming limit has been evaluated by comparison between the FLD of the Nakajima test and that of the Marciniak test from a strain amount measured in an actual press formed part and a strain amount acquired from a press forming analysis result using CAE.

However, in the Nakajima test, even under a press forming condition in which it is predicted from the strain amount acquired by the press forming analysis that no fracture is generated, there is a case where a fracture is generated in an actual press formed part of a metal sheet, specifically in an actual press formed part of a high-strength steel sheet of 980 MPa or more. In addition, in the Marciniak test, even under a press forming condition in which a fracture is predicted to be generated, there is a case where no fracture is generated in an actual press formed part. As described above, there have been many cases where there is a large deviation between a prediction result of presence or absence of fracture generation, which prediction result is based on the FLD, and presence or absence of fracture generation in the actual press formed part, and there have been problems.

In addition, the method proposed in Non-Patent Literature 2 can accurately acquire the forming limit as compared with ISO12004. However, similarly to ISO12004, the forming limit cannot be acquired in consideration of a degree of a bending deformation. Thus, a result of prediction of presence or absence of fracture generation based on the forming limit diagram acquired by the method proposed in Non-Patent Literature 2 does not coincide with presence or absence of fracture generation in an actual press formed part in some cases.

Furthermore, the forming limit curve created by the method of Patent Literature 1 is specialized for a case where a crack is generated from a surface of a steel sheet and a fracture is generated without generation of constriction (necking) as tensile strength of the steel sheet is enhanced and hardened to 980 MPa-class or 1180 MPa-class. Thus, the forming limit strain becomes higher than that in the Nakajima test, and it is not possible to predict generation of ductility-dominated fracture in which sheet thickness reduction progresses from the generation of localized constriction (localized necking) and the fracture is generated in actual press forming.

As described above, in the actual press forming, a portion subjected to the bending deformation and a portion not subjected thereto are mixed, and a degree of the bending deformation varies depending on the portion. However, the degree of the bending deformation is not taken into consideration in the conventional method of acquiring the FLD.

The present invention has been made in view of the above problems, and an object thereof is to provide a metal sheet forming limit acquisition method and apparatus capable of acquiring a forming limit of a metal sheet in consideration of an influence of bending deformation. Solution to Problem

<Circumstances leading to the invention>

As described above, although a difference between the FLDs of the Nakajima test and the Marciniak test is as small as about 1 to 2% in terms of strain, a slight difference in the strain (forming amount) causes a difference in generation of a fracture in a high-tensile steel sheet having low ductility. The inventors focused on presence or absence of bending deformation of a test piece in a forming limit test as one of causes of the difference between forming limits of the Nakajima test and the Marciniak test.

As described above, in the Nakajima test, since the test piece 100 is bulge-formed by the hemispherical punch 43, a forming limit is affected by bending deformation of the test piece 100 (FIG. 9(a)). On the other hand, in the Marciniak test, since the test piece 100 is bulge-formed by the flat punch 53, the test piece 100 is not affected by bending deformation.

Thus, in order to examine an influence of the bending deformation of the test piece 100 in the forming limit test, the inventors conducted the bulge test by using a plurality of the hemispherical punches 43 having different curvatures at tip portions 43a and the flat punch 53 as illustrated in FIG. 9 under a condition of a plane strain (minimum principal strain = 0). Then, on the basis of results of the bulge test using the hemispherical punches 43 and the flat punch 53, the respective forming limits were acquired.

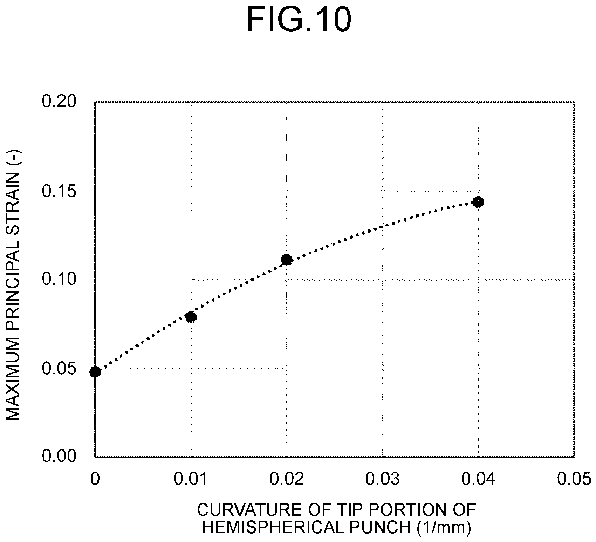

A relationship between the curvature of the tip portion 43a of the hemispherical punch 43 and the maximum principal strain representing the forming limit is illustrated in FIG. 10. In FIG. 10, the maximum principal strain at the curvature 0 was acquired by the bulge test using the flat punch 53 illustrated in FIG. 9(b).

As illustrated in FIG. 10, it has been found that the maximum principal strain to be the forming limit becomes larger as the curvature of the tip portion 43a becomes larger, that is, in the bulge forming in which steep bending deformation is applied by the tip portion 43a of the hemispherical punch 43. As a result, it has been found that it is necessary to acquire the forming limit in consideration of the degree of the bending deformation in order to predict the presence or absence of the fracture generation in the actual press forming. The present invention has been made on the basis of such findings, and specifically has the following configurations.

To solve the problem and achieve the object, a metal sheet forming limit acquisition method according to the present invention includes: bulge forming a test piece of a metal sheet at various bending deformation degrees by using a plurality of hemispherical punches having different curvatures at tip portions; and acquiring a forming limit of the metal sheet which limit is represented by a relationship between a bending deformation degree of the bulge-formed test piece and a maximum principal strain and a minimum principal strain of the test piece bulge-formed at the bending deformation degrees.

Moreover, the bending deformation degrees may be expressed by the curvatures of the tip portions of the hemispherical punches.

Moreover, a metal sheet forming limit acquisition method according to the present invention is the method of acquiring a forming limit of a metal sheet in consideration of a bending deformation degree. The method includes: a forming test step; a forming limit analysis step; and a boundary surface of a forming limit creation step, wherein the forming test step includes a test piece preparation process of preparing a test piece in which a predetermined grid or strain analysis pattern is applied to a surface of the metal sheet, a bulge forming process of performing bulge forming of the test piece at various bending deformation degrees by using a plurality of hemispherical punches having different curvatures at tip portions while photographing a surface of the test piece provided with the grid or strain analysis pattern, a strain measurement process of analyzing an image of the surface of the test piece photographed in the bulge forming process and measuring a strain generated in the test piece for each of the bending deformation degrees of the bulge-formed test piece, and a strain database construction process of storing the strain measured for each of the bending deformation degrees of the bulge-formed test piece in time series from a start of forming to fracture, and of constructing a strain database, the forming limit analysis step includes a strain distribution extraction process of extracting, for each of the bending deformation degrees of the bulge-formed test piece, a strain distribution in a vicinity of a fracture generated portion of the test piece from the strain database, and a forming limit acquisition process of acquiring, for each of the bending deformation degrees of the test piece, a forming limit strain represented by a maximum principal strain and a minimum principal strain at the fracture generated portion of the test piece from the extracted strain distribution, and the boundary surface of a forming limit creation step includes a forming limit plotting process of plotting the forming limit strain, which is acquired for each of the bending deformation degrees in the forming limit analysis step, in a three-dimensional coordinate space having three axes of the maximum principal strain, the minimum principal strain, and the bending deformation degree, and a boundary surface of a forming limit creation process of creating, on a basis of the forming limit strain of each of the bending deformation degrees which strain is plotted in the three-dimensional coordinate space, a boundary surface of a forming limit which surface is represented by a relationship among the maximum principal strain, the minimum principal strain, and the bending deformation degree.

Moreover, in the boundary surface of a forming limit creation process, as the boundary surface of a forming limit, a polygonal surface including a plurality of triangular planes each of which connects two adjacent plots among plots of a forming limit strain group having a same bending deformation degree and one plot that has a shortest distance to a line segment connecting the two plots and that is among plots of a forming limit strain group having a bending deformation degree different from that of the two plots may be created.

Moreover, in the boundary surface of a forming limit creation process, a boundary flat surface of a forming limit or a boundary curved surface of a forming limit may be assumed, a sum of squares of a vertical distance between the assumed boundary flat surface of a forming limit or boundary curved surface of a forming limit and a plot of the forming limit strain for each of the bending deformation degrees in the three-dimensional coordinate space may be acquired, and the boundary surface of a forming limit may be created by determination of the boundary flat surface of a forming limit or the boundary curved surface of a forming limit at which the acquired sum of squares is minimized.

Moreover, in the boundary surface of a forming limit creation process, a boundary flat surface of a forming limit or a boundary curved surface of a forming limit may be assumed, a sum of squares in which a vertical distance between the assumed boundary flat surface of a forming limit or boundary curved surface of a forming limit and a plot of the forming limit strain for each of the bending deformation degrees in the three-dimensional coordinate space is weighted may be acquired, and the boundary surface of a forming limit may be created by determination of the boundary flat surface of a forming limit or the boundary curved surface of a forming limit in such a manner that the acquired sum of squares is minimized.

Moreover, in the boundary surface of a forming limit creation process, the boundary surface of a forming limit may be created by combination of a plurality of the boundary flat surfaces of a forming limit and boundary curved surfaces of a forming limit.

Moreover, a metal sheet forming limit acquisition apparatus according to the present invention is the apparatus of acquiring a forming limit of a metal sheet in consideration of a bending deformation degree. The apparatus includes: a forming test unit; a forming limit analysis unit; and a boundary surface of a forming limit creation unit, wherein the forming test unit includes a molding die that includes a plurality of hemispherical punches having different curvatures at tip portions, and performs bulge forming of a test piece of the metal sheet, to which a predetermined grid or strain analysis pattern is applied, at various bending deformation degrees by using the plurality of hemispherical punches, a photographing device that photographs a surface of the test piece in a process of bulge forming the test piece with the molding die, a strain measurement device that analyzes an image of the surface of the test piece photographed by the photographing device and measures a strain generated in the test piece for each of the bending deformation degrees, and a strain database construction device that constructs a strain database storing the measured strain for each of the bending deformation degrees of the bulge-formed test piece in time series from a start of forming to fracture, the forming limit analysis unit includes a strain distribution extraction device that extracts, for each of the bending deformation degrees of the bulge-formed test piece, a strain distribution in a vicinity of a fracture generated portion of the test piece from the strain database, and a forming limit acquisition device that acquires, for each of the bending deformation degrees of the test piece, a forming limit strain represented by a maximum principal strain and a minimum principal strain at the fracture generated portion of the test piece from the extracted strain distribution, and the boundary surface of a forming limit creation unit includes a forming limit plotting device that plots the forming limit strain, which is acquired for each of the bending deformation degrees by the forming limit analysis unit, in a three-dimensional coordinate space having three axes of the maximum principal strain, the minimum principal strain, and the bending deformation degree, and a boundary surface of a forming limit creation device that creates a boundary surface of a forming limit, which surface is represented by a relationship among the maximum principal strain, the minimum principal strain, and the bending deformation degree, on a basis of the forming limit plotted in the three-dimensional coordinate space.

Advantageous Effects of Invention

According to the present invention, the test piece of the metal sheet is subjected to the bulge forming at various bending deformation degrees, and the bending deformation degree is acquired in addition to the maximum principal strain and the minimum principal strain as indexes of the forming limit, whereby the forming limit of the metal sheet can be acquired in consideration of the influence of the bending deformation. Furthermore, according to the present invention, it is possible to acquire a boundary surface of a forming limit which surface is represented by a relationship among the bending deformation degree, the maximum principal strain, and the minimum principal strain.

Brief Description of Drawings

FIG. 1 is a flowchart illustrating a processing flow of a metal sheet forming limit acquisition method according to an embodiment of the present invention.
FIG. 2 is a view illustrating an example of a molding die used for bulge forming of a test piece in a metal sheet forming limit acquisition method and forming limit apparatus according to the embodiment of the present invention.
FIG. 3 is a view illustrating shapes of test pieces of a metal sheet used for a bulge test in the present embodiment and an example.
FIG. 4 is a view illustrating a configuration of a metal sheet forming limit test apparatus according to the embodiment of the present invention.
FIG. 5 is a view illustrating a flow of processing of acquiring a forming limit of a metal sheet in the example.

FIG. 6 is a view illustrating a shape of a hemispherical punch used for bulge forming in the example.

FIG. 7 is a graph illustrating a forming limit strain acquired for each bending deformation degree in the example.

FIG. 8 is a graph illustrating a result of acquiring a boundary surface of a forming limit which surface is represented by a relationship among a maximum principal strain, a minimum principal strain, and a bending deformation degree in the example.

FIG. 9 is a view illustrating an example of a molding die and a forming limit diagram used in a conventional forming limit test ((a) Nakajima test, (b) Marciniak test, and (c) forming limit diagram acquired by each of Nakajima test and Marciniak test).

FIG. 10 is a graph for describing an influence of a degree of bending deformation of the test piece with respect to the forming limit strain.

Description of Embodiments

<Metal sheet forming limit acquisition method>

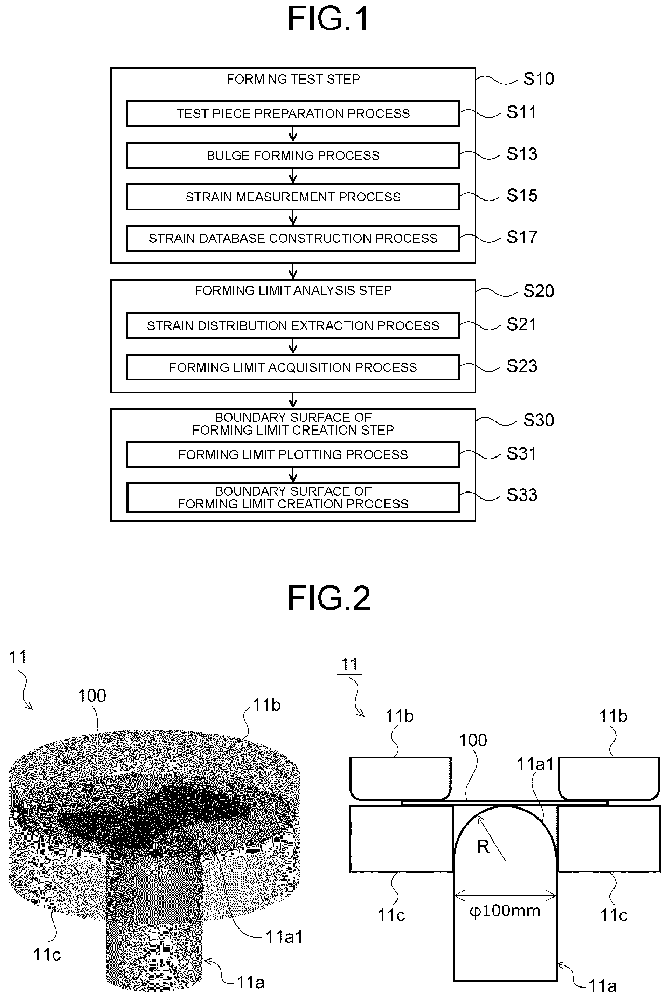

As illustrated in FIG. 2 as an example, in the metal sheet forming limit acquisition method (hereinafter, also simply referred to as "forming limit acquisition method") according to the present embodiment is to perform bulge forming of a test piece 100 of the metal sheet at various bending deformation degrees by using a plurality of hemispherical punches 11a having different curvatures at tip portions 11a1. Then, the forming limit acquisition method is to acquire a forming limit of the metal sheet which limit is represented by a relationship between a bending deformation degree of the bulge-formed test piece and a maximum principal strain and a minimum principal strain at a fracture generated portion of the test piece bulge-formed at the bending deformation degree.

As illustrated in FIG. 2, each of the hemispherical punches 11a has a hemispherical surface having a curvature radius R, that is, the tip portion 11a1 having a curvature $\rho$ (= 1/R) larger than 0. However, in the present invention, the hemispherical punches 11a also include the flat punch 53 having the tip portion 53a with a plane (curvature radius R = $\infty$, and curvature $\rho$ = 0) in a manner illustrated in FIG. 9(b). Thus, each of the hemispherical punches 11a according to the present invention has the tip portion 11a1 having the curvature $\rho$ of 0 or more.

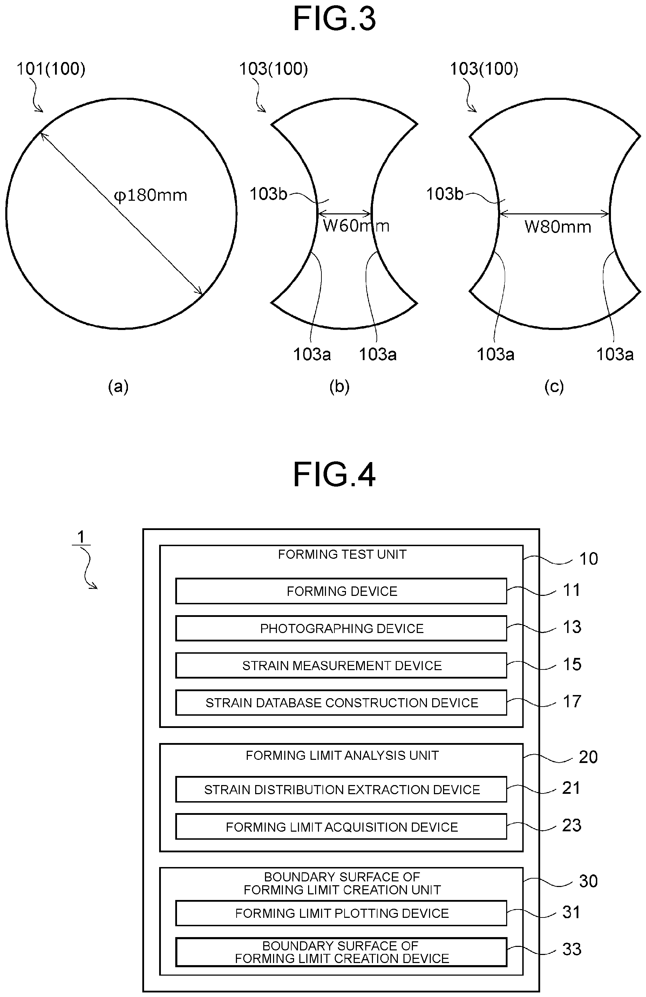

As the test piece 100, a test piece 101 and a test piece 103 having shapes illustrated as examples in FIG. 3 are used to acquire a forming limit in each of the deformation forms (equibiaxial deformation, non-equibiaxial deformation, plane strain deformation, and uniaxial deformation) in press forming. As illustrated in FIG. 3(a), the test piece 101 has a disk shape, and is to acquire a forming limit of the equibiaxial deformation. On the other hand, as illustrated in FIGS. 3(b) and (c), in the test piece 103, a cut-out portion 103a having a shape cut out in an arc shape is formed at a position facing a diameter direction of a disk-shaped peripheral edge portion. As for the test piece 103, a width W of a narrowest portion in a central portion 103b is variously changed. As the width W is narrowed, the equibiaxial deformation is changed to the non-equibiaxial deformation and the plane strain deformation, and is gradually brought close to uniaxial tension, and the forming limit in each of the deformation forms is acquired. Furthermore, the test piece 100 is assumed to have a predetermined grid or strain analysis pattern on a surface of the metal sheet.

The bending deformation degree serving as an index of the forming limit represents a degree of the bending deformation in the bulge-formed portion in the test piece 100, and a measured value of a curvature radius or a curvature of the bulge-formed portion can be used as the bending deformation degree.

However, in the present embodiment, the bending deformation degree may be expressed by the curvature of the tip portion 11a1 of the hemispherical punch 11a used for the bulge forming of the test piece 100 without actual measurement of the curvature radius or the curvature of the bulge-formed portion.

Furthermore, the method of acquiring the maximum principal strain and the minimum principal strain to be indices of the forming limit is not specifically limited. It is only necessary that the forming limit is acquired on the same basis for the strain measured by utilization of the plurality of hemispherical punches 11a having the different curvatures at the tip portions 11a1. For example, the maximum principal strain and the minimum principal strain at the time of generation of a fracture may be acquired from a shape of marking applied to the surface of the test piece 100 in a vicinity of a fracture generated portion of the test piece 100 bulge-formed until the fracture is generated, or may be acquired by a method described later.

A specific aspect of the forming limit acquisition method according to the present embodiment will be described. As a specific aspect of the forming limit acquisition method according to the present embodiment, as illustrated in FIG. 1, what includes a forming test step S10, a forming limit analysis step S20, and a boundary surface of a forming limit creation step S30 can be described as an example.

<<Forming test step>>

As illustrated in FIG. 1, the forming test step S10 includes a test piece preparation process S11, a bulge forming process S13, a strain measurement process S15, and a strain database construction process S17.

(Test piece preparation process)

The test piece preparation process S11 is a process of preparing the test piece 100 in which a predetermined grid or strain analysis pattern is applied to the surface of the metal sheet. As the test piece 100, as illustrated in FIG. 3 described above, the circular test piece 101 and the test piece 103 having the shape in which the cut-out portion 103a is formed in a circular outer edge portion are prepared. Then, as the test piece 103 in which the cut-out portion 103a is formed, test pieces in which the width W of the central portion 103b is changed at a plurality of levels are prepared.

(Bulge forming process)

The bulge forming process S13 is a process of performing bulge forming of the test piece 100 at various bending deformation degrees by using the plurality of hemispherical punches 11a having different curvatures at the tip portions 11a1 while photographing the surface of the test piece 100 to which surface the grid or strain analysis pattern is applied.

(Strain measurement process)

The strain measurement process S15 is a process of analyzing an image of the surface of the test piece 100 photographed in the bulge forming process S13 and measuring the strain generated in the test piece 100 for each of the bending deformation degrees. As a method of measuring the strain, for example, digital image correlation (hereinafter, referred to as "DIC") is used. The surface of the test piece 100 in the bulge forming process is imaged at predetermined time intervals, an image analysis of an image imaged in each time step is performed, and the maximum principal strain and the minimum principal strain are measured as strain generated in the test piece 100 in two in-plane directions according to the deformation degree of the grid or strain analysis pattern.

(Strain database construction process)

The strain database construction process S17 is a process of constructing a strain database by storing the strain measured in the strain measurement process S15 in time series from the start of forming to the fracture for each of the bending deformation degrees.
That is, in the forming test step S10, first, the test piece 100 to which a predetermined grid (sample grid) is applied is prepared in the test piece preparation process S11. Then, while bulge forming of the test piece 100 is performed in the bulge forming process S13, the strain on the surface of the test piece 100 is measured by utilization of an image analysis device in the strain measurement process S15, and the maximum principal strain and the minimum principal strain generated in the test piece 100 are recorded in the strain database. Then, the forming is gradually advanced, and measurement of the strain and recording of time-series change are repeated until the fracture is generated in the test piece 100, whereby the strain database from the start of forming to the fracture is constructed. The above operation is performed for each shape of the test piece 100 and each of the hemispherical punches 11a having different curvatures at the tip portions 11a1.

<<Forming limit analysis step>>

As illustrated in FIG. 1, the forming limit analysis step S20 includes a strain distribution extraction process S21 and a forming limit acquisition process S23.

(Strain distribution extraction process)

The strain distribution extraction process S21 is a process of extracting strain distribution in the vicinity of the fracture generated portion of the test piece 100 bulge-formed at various bending deformation degrees from the strain database constructed in the strain database construction process S17. In the present embodiment, the strain distribution extracted in the strain distribution extraction process S21 is time-series data of the strain stored for each of the bending deformation degrees in the strain database.

(Forming limit acquisition process)

The forming limit acquisition process S23 is a process of acquiring, for each of the bending deformation degrees of the test piece 100, the forming limit strain represented by the maximum principal strain and the minimum principal strain at the fracture generated portion of the test piece 100 from the strain distribution extracted in the strain distribution extraction process S21.

In the forming limit analysis step S20, the forming limit strain may be acquired, for example, as follows. First, in the strain distribution extraction process S21, the maximum principal strain and the minimum principal strain in the vicinity of the fracture generated portion of the test piece 100 are extracted for each predetermined time step from the start of forming to the fracture for each of the bending deformation degrees, and the time-series data is created.

Then, in the forming limit acquisition process S23, a bend point at which the test piece 100 transitions from a uniform deformation to an inhomogeneous deformation is determined in the time-series data of each of the maximum principal strain and the minimum principal strain created for each of the bending deformation degrees. Then, it is assumed that necking is generated in the test piece 100 at the bend point of the strain, and the maximum principal strain and the minimum principal strain at that time are acquired as the forming limit strain at the bending deformation degree. As described above, by acquiring the forming limit strain for each of the bending deformation degrees, the forming limit represented by the relationship among the bending deformation degree, the maximum principal strain, and the minimum principal strain can be acquired.

However, in the present invention, in the time-series data of the maximum principal strain and the minimum principal strain, the maximum principal strain and the minimum principal strain at the time when the fracture is generated in the test piece 100 may be calculated as the forming limit strain.

The forming limit strain may be acquired by any method as long as the strain measured in the bulge test using the plurality of hemispherical punches 11a having the different curvatures at the tip portion 11a1 is acquired on the basis of the same criterion.

<<Boundary surface of a forming limit creation step>>

As illustrated in FIG. 1, the boundary surface of a forming limit creation step S30 includes a forming limit plotting process S31 and a boundary surface of a forming limit creation process S33.

(Forming limit plotting process)

The forming limit plotting process S31 is a process of plotting the forming limit strain, which is acquired for each of the bending deformation degrees in the forming limit analysis step S20, in a three-dimensional coordinate space having three axes of the maximum principal strain, the minimum principal strain, and the bending deformation degree.

(Boundary surface of a forming limit creation process)

The boundary surface of a forming limit creation process S33 is a process of creating a boundary surface of a forming limit on the basis of the forming limit plotted in the three-dimensional coordinate space having the maximum principal strain, the minimum principal strain, and the bending deformation degree as coordinate axes in the forming limit plotting process S31. The boundary surface of a forming limit which surface is created in the boundary surface of a forming limit creation process S33 is represented by the relationship among the maximum principal strain, the minimum principal strain, and the bending deformation degree. As a method of creating the boundary surface of a forming limit in the boundary surface of a forming limit creation process S33, for example, there are the following methods.

In the first method, first, plots of two forming limit strains with equal bending deformation degrees are extracted. Then, in a forming limit strain group of a bending deformation degree different from that of the two forming limit strains, a plot of one forming limit strain having the shortest distance to a line segment connecting the plots of the two forming limit strains is selected. Subsequently, a triangular plane is formed by the two extracted forming limit strain plots and the one selected forming limit strain plot. Such a triangular plane is created for plots of all the forming strain groups. Then, a polygonal surface acquired by combination of the created triangular planes is set as the boundary surface of a forming limit.

In the second method, first, a boundary flat surface of a forming limit or a boundary curved surface of a forming limit is assumed in a three-dimensional coordinate space, and a vertical distance between the assumed boundary flat surface of a forming limit or boundary curved surface of a forming limit and a plot of the forming limit strain is calculated. Then, the boundary flat surface of a forming limit or the boundary curved surface of a forming limit is determined in such a manner that the sum of squares of the calculated vertical distance is minimized.

A third method is a method of determining, in the second method, the boundary flat surface of a forming limit or the boundary curved surface of forming limit in such a manner that the sum of squares in which the vertical distance between the assumed boundary flat surface of a forming limit or boundary curved surface of a forming limit and the plot of the forming limit strain is weighted is minimized.

As a way of weighting, for example, it is preferable to increase the weight for the forming limit of the bending deformation degree at which the fracture is likely to be generated in actual press forming. As a result, it is possible to reduce an error between the determined boundary flat surface of a forming limit or boundary curved surface of a forming limit and the plot of the forming limit strain at the bending deformation degree at which the fracture is likely to be generated in the actual press forming.

In the second method or the third method, a plurality of the boundary flat surfaces of a forming limit and/or boundary curved surfaces of a forming limit may be combined. For example, the boundary flat surface of a forming limit or the boundary curved surface of a forming limit is assumed in each of a negative region and a positive region of the minimum principal strain, and the boundary flat surface of a forming limit or the boundary curved surface of a forming limit may be determined in such a manner that the sum of squares of the vertical distance to the plot of the forming limit strain is minimized for each of the regions. The same applies to a case where the boundary surface of a forming limit is created in such a manner that the sum of squares in which the vertical distance to the plot of the forming limit strain is weighted is minimized.

In addition, as a method other than the above, three adjacent points may be selected in the plot of the forming limit strain in the three-dimensional coordinate space, a triangular plane may be generated by connection of the selected three points with straight lines, and a polygonal surface including a plurality of the triangular planes generated in such a manner may be used as the boundary surface of a forming limit.

Alternatively, a forming limit curve may be created on the basis of the forming limit strain for each of the bending deformation degrees, and the boundary surface of a forming limit which surface includes the created forming limit curve may be created.

<Metal sheet forming limit acquisition apparatus>

The above description relates to a method of acquiring the boundary surface of a forming limit of the metal sheet which surface is represented by the relationship among the maximum principal strain, the minimum principal strain, and the bending deformation degree. However, the present invention can also be configured as an apparatus that creates a boundary surface of a forming limit of a metal sheet. That is, the metal sheet forming limit acquisition apparatus (hereinafter, simply referred to as "forming limit acquisition apparatus") according to the present embodiment is to acquire a forming limit of a metal sheet in consideration of a bending deformation degree. As illustrated in FIG. 4, the forming limit acquisition apparatus 1 includes a forming test unit 10, a forming limit analysis unit 20, and a boundary surface of a forming limit creation unit 30.

<<Forming test unit>>

The forming test unit 10 includes a molding die 11, a photographing device 13, a strain measurement device 15, and a strain database construction device 17.

The molding die 11 performs bulge forming of a test piece at various bending deformation degrees, and includes a plurality of hemispherical punches 11a having different curvatures at tip portions 11a1, an upper die 11b, and a blank holder 11c as illustrated in FIG. 2.

The photographing device 13 photographs a degree of deformation of the grid or the strain analysis pattern on the surface of the test piece 100 in the process of bulge forming the test piece 100, to which the grid or the strain analysis pattern is applied, with the molding die 11. The photographing device 13 includes, for example, two cameras, and performs stereo photographing of the surface of the test piece 100.

The strain measurement device 15 analyzes an image of the surface of the test piece 100 photographed by the photographing device 13, and measures a strain generated in the test piece 100 for each of the bending deformation degrees of the bulge-formed test piece 100. For example, the strain measurement device 15 uses the digital image correlation and measures the maximum principal strain and the minimum principal strain as strains generated in the test piece 100 in two in-plane directions in the bulge forming process.

The strain database construction device 17 constructs a strain database in which the strain measured by the strain measurement device 15 can be stored and extracted in time series from the start of forming to the fracture for each of bending deformation degrees of the bulge-formed test piece.

<<Forming limit analysis unit>>

As illustrated in FIG. 4, the forming limit analysis unit 20 includes a strain distribution extraction device 21 and a forming limit acquisition device 23.

(Strain distribution extraction device)

The strain distribution extraction device 21 extracts a strain distribution in the vicinity of the fracture generated portion of the test piece 100 from the strain database constructed by the strain database construction device 17 for each of the bending deformation degrees of the bulge-formed test piece 100.

(Forming limit acquisition device)

The forming limit acquisition device 23 acquires a forming limit strain represented by the maximum principal strain and the minimum principal strain at the fracture generated portion of the test piece 100 for each of the bending deformation degrees of the test piece 100 from the strain distribution extracted by the strain distribution extraction device 21.

<<Boundary surface of a forming limit creation unit>>

As illustrated in FIG. 4, the boundary surface of a forming limit creation unit 30 includes a forming limit plotting device 31 and a boundary surface of a forming limit creation device 33.

(Forming limit plotting device)

The forming limit plotting device 31 plots a forming limit represented by a relationship between the bending deformation degree acquired by the forming limit analysis unit 20 and the maximum principal strain and the minimum principal strain in a three-dimensional coordinate space having three axes of the maximum principal strain, the minimum principal strain, and the bending deformation degree.

(Boundary surface of a forming limit creation device)

The boundary surface of a forming limit creation device creates a boundary surface of a forming limit which surface is represented by a relationship among the maximum principal strain, the minimum principal strain, and the bending deformation degree on the basis of a forming limit plotted in a three-dimensional coordinate space by the forming limit plotting device 31.

As described above, according to the metal sheet forming limit acquisition method according to the present embodiment, the test piece of the metal sheet is bulge-formed at various bending deformation degrees, and the maximum principal strain and the minimum principal strain of the fracture generated portion are acquired for each of the bending deformation degrees, whereby the forming limit in which an influence of the bending deformation is considered can be acquired.

In the conventional forming limit test method, as illustrated in FIG. 9, a forming limit strain group acquired from the test piece 100 formed by bulge forming using the specific hemispherical punch 43 or the flat punch 53, and one forming limit curve (FLC) that is an approximate line thereof are created.

On the other hand, in the forming limit acquisition method and the forming limit apparatus according to the present embodiment, the bending deformation degree is expressed by the curvature at the tip portion of the hemispherical punch, and the bulge test is performed by utilization of a plurality of the hemispherical punches 11a having different curvatures at the tip portions. As a result, a forming limit strain group is acquired for each of the bending deformation degrees by the number of shapes of the hemispherical punches 11a. Thus, with the bending deformation degree in each of the forming limit strain groups as a new evaluation axis, the forming limit can be plotted in the three-dimensional coordinate space having the maximum principal strain, the minimum principal strain, and the bending deformation degree as coordinate axes. As a result, the boundary surface of a forming limit which surface is represented by the relationship with the bending deformation degree in addition to the maximum principal strain and the minimum principal strain can be acquired. In addition, as a bending deformation degree of a press formed part, the maximum principal strain, the minimum principal strain, and a curvature in a direction of the maximum principal strain (such as a maximum principal curvature, or the like) are acquired as the bending deformation degree by a press forming analysis of the press formed part. On the basis of a relationship between the acquired maximum principal strain, minimum principal strain, and bending deformation degree, and the boundary surface of a forming limit, it is possible to accurately perform prior prediction of fracture generation in the press forming in consideration of the influence of the bending deformation.

[Example]

An experiment for acquiring a boundary surface of a forming limit of a metal sheet by the metal sheet forming limit acquisition method according to the present embodiment has been conducted, and a result thereof will be described below.

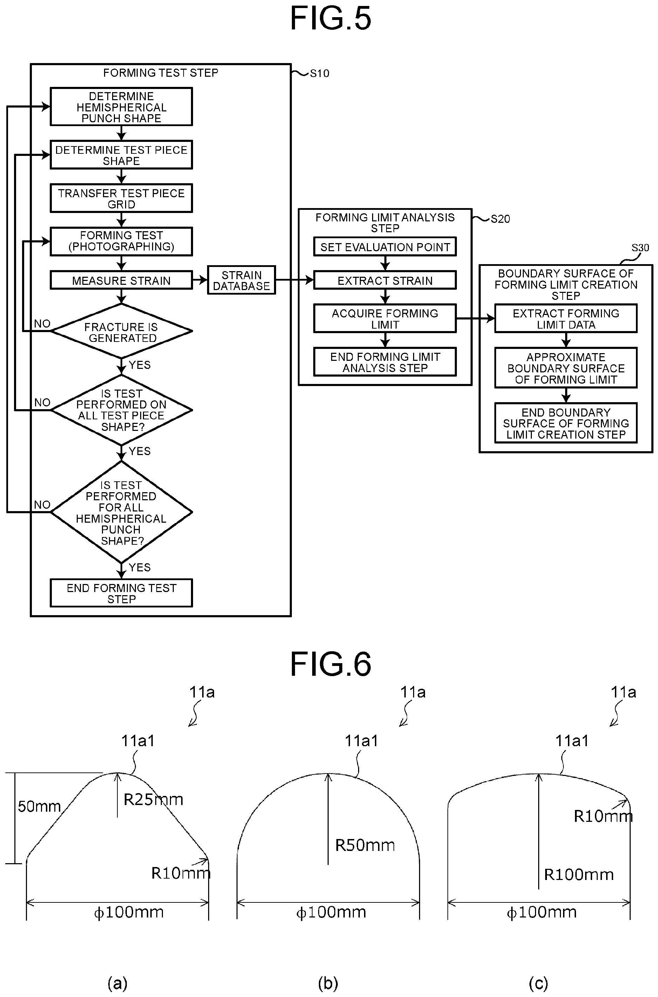

The present example was performed on the basis of a procedure illustrated in FIG. 5. First, in the forming test step S10, the test piece 100 was bulge-formed by utilization of the molding die 11 including the hemispherical punch 11a, the upper die 11b, and the blank holder 11c illustrated in FIG. 2.

In performance of the bulge forming, first, a shape (curvature) of the tip portion 11a1 of the hemispherical punch 11a was determined. As illustrated in FIG. 6, four types of the hemispherical punches 11a in which the curvature radii at the tip portions 11a1 were respectively R 25 mm, R 50 mm, R 100 m, and R = ∞ (corresponding to the flat punch 53 illustrated in FIG. 9(b)) were prepared. The curvatures at the tip portions 11a1 are 0.04, 0.02, 0.01, and 0.00, respectively.

Then, a test piece 100 of a high-strength steel sheet having a tensile strength of 1470 MPa-class and a sheet thickness of 1.4 mm was used as a test material of a metal sheet, and a shape of the test piece 100 was determined. In the present example, as illustrated in FIG. 3 described above, shapes of the test piece 100 are a circular test piece 101 having a diameter of φ180 mm and a test piece 103 having a shape cut out in a width direction with the test piece 101 as a basis. Furthermore, the test piece 103 had five types of shapes in which a width W of a central portion 103b was from 25 mm to 160 mm. As examples, a test piece 103 having the width W of 60 mm is illustrated in FIG. 3(b), and a test piece 103 having the width W of 80 mm is illustrated in FIG. 3(c). A grid-like pattern (grid) for strain measurement was transferred to a surface of the test piece 100 having the shape determined in such a manner.

Then, the molding die 11 illustrated in FIG. 2 was set in a hydraulic-type deep drawing tester, and the test piece 100 was bulge-formed. In the bulge forming, in order to control inflow of the test piece 100, a blank holder pressure of 50 ton was applied as a load by the blank holder, and a punch speed of the hemispherical punch 11a was set to 5 mm/min. Then, while the bulge forming was performed, the surface of the test piece 100 was photographed with an image analysis camera that is a photographing device (not illustrated) installed in an upper portion of the molding die 11.

Subsequently, the photographed image of the surface of the test piece 100 was analyzed, and an amount of the strain (maximum principal strain and minimum principal strain) generated on the surface of the test piece 100 was measured. The measured strain amount was stored in the strain database. Then, it was visually determined whether a fracture was generated in the test piece 100. In a case where it was determined that the fracture was not generated, the bulge forming was proceeded, and photographing of the surface of the test piece 100, measurement of the strain amount by the image analysis, and storage into the strain database were repeated. As described above, in the present example, the surface of the test piece was photographed at an interval of once/second from the start of forming to generation of the fracture, the strain amount was measured for each of the photographed images, and the measurement was continued until it was determined that the fracture was generated.

In a case where it was determined that the fracture was generated, it was determined whether the test was performed on all the shapes of the prepared test pieces 100. In a case where it was determined that the test was not performed on all the shapes of the test pieces 100, the bulge forming, the measurement of the strain amount, and the storage into the strain database were repeated for the test piece 100 having another shape.

In a case where it was determined that the test was performed on all the shapes of the test pieces 100, it was determined whether the test was performed for all the shapes of the prepared hemispherical punches 11a. Then, the bulge test was performed with respect to all the shapes of the hemispherical punches 11a.

After the forming test step S10 was completed, the forming limit analysis was performed in the forming limit analysis step S20 by utilization of the strain database constructed in the forming test step S10.

First, evaluation points for acquiring the forming limit strain were set in the vicinity of the fracture generated portion of the test piece 100. Then, time-series data of the maximum principal strain and the minimum principal strain was extracted from the strain database for each of the set evaluation points.

Then, in the time-series data of each of the maximum principal strain and the minimum principal strain acquired for each shape of the test piece 100, the maximum principal strain and the minimum principal strain at the bend point at which a uniform deformation changes to an inhomogeneous deformation were acquired as the forming limit strain. Furthermore, this operation was performed for all the hemispherical punches 11a that have different curvature radii at the tip portions 11a1 and that are used in the bulge test, and the forming limit strain (maximum principal strain and minimum principal strain) was acquired for each of the bending deformation degrees.

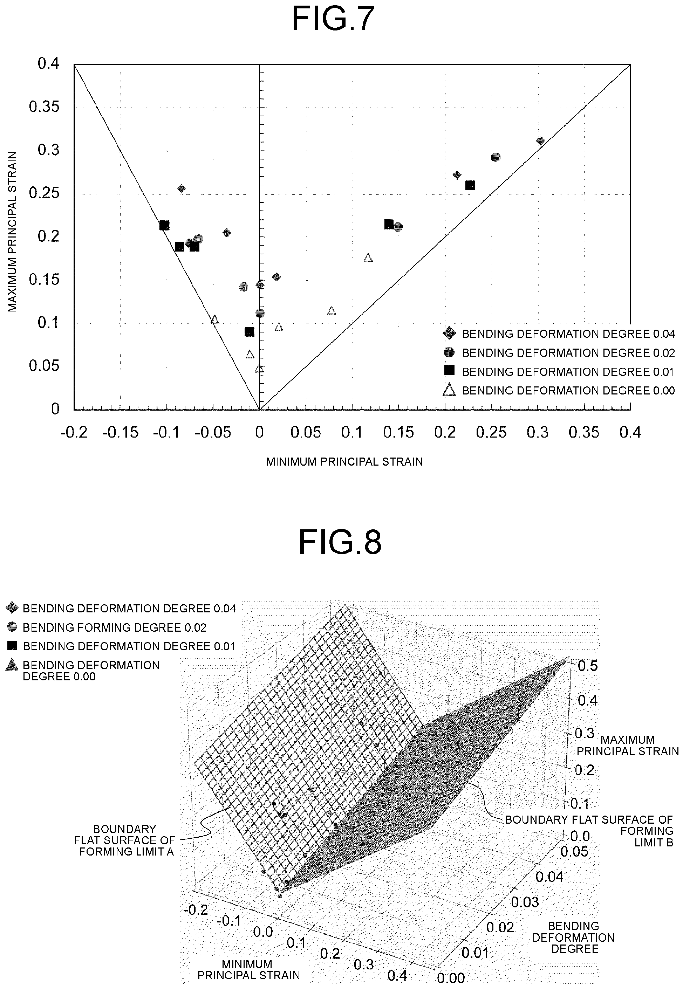

Values of the forming limit strain acquired for each of the bending deformation degrees are illustrated in Table 1. Furthermore, a graph in which the forming limit strain is plotted on a two-dimensional coordinate plane having the minimum principal strain and the maximum principal strain as coordinate axes is illustrated in FIG. 7.

Table 1

| Curvature radius of hemispherical punch | Bending deformation degree (1/mm) | Width W | Forming limit strain | |
|---|---|---|---|---|
| | | | Minimum principal strain | Maximum principal strain |
| R = 25mm | 0.04 | 25mm | -0.084 | 0.256 |
| | 0.04 | 40mm | -0.036 | 0.205 |
| | 0.04 | 60mm | 0.000 | 0.145 |
| | 0.04 | 80mm | 0.018 | 0.154 |
| | 0.04 | 160mm | 0.213 | 0.272 |
| | 0.04 | (No cut-out) | 0.303 | 0.311 |
| R = 50mm | 0.02 | 25mm | -0.075 | 0.193 |
| | 0.02 | 40mm | -0.066 | 0.198 |
| | 0.02 | 60mm | -0.018 | 0.143 |
| | 0.02 | 80mm | 0.000 | 0.112 |
| | 0.02 | 160mm | 0.149 | 0.212 |
| | 0.02 | (No cut-out) | 0.254 | 0.292 |
| R = 100mm | 0.01 | 25mm | -0.103 | 0.214 |
| | 0.01 | 40mm | -0.086 | 0.190 |
| | 0.01 | 60mm | -0.071 | 0.189 |
| | 0.01 | 80mm | -0.011 | 0.090 |
| | 0.01 | 160mm | 0.139 | 0.215 |
| | 0.01 | (No cut-out) | 0.227 | 0.260 |
| R = ∞mm (Flat punch) | 0.00 | 25mm | -0.048 | 0.105 |
| | 0.00 | 40mm | -0.011 | 0.065 |
| | 0.00 | 60mm | 0.000 | 0.048 |
| | 0.00 | 80mm | 0.021 | 0.097 |
| | 0.00 | 160mm | 0.078 | 0.115 |
| | 0.00 | (No cut-out) | 0.117 | 0.177 |

After the forming limit analysis step S20 was completed, a boundary surface of a forming limit was created on the basis of the forming limit strain acquired for each of the bending deformation degrees in the boundary surface of a forming limit creation step S30.

In the forming limit analysis step S20, first, the forming limit strain (forming limit data) acquired for each of the bending deformation degrees in the forming limit analysis step was extracted, and plotted in a three-dimensional coordinate space having the maximum principal strain, the minimum principal strain, and the bending deformation degree as coordinate axes.

Then, the boundary surface of a forming limit approximating the forming limit data was acquired. In the present example, a boundary flat surface of a forming limit which surface was expressed by the following expression (1) was assumed for each of a negative region and a positive region of the minimum principal strain.

$$ax + by + cz + d = 0 \qquad \cdots (1)$$

Then, coefficients in the expression (1) were determined for each of the boundary flat surface of a forming limit A in the positive region and a boundary flat surface of a forming limit B in the negative region in such a manner that the sum of squares of a vertical distance between the assumed boundary surface of a forming limit and a plot of the forming limit strain group of each of the bending deformation degrees was minimized. As described above, the boundary flat surface of a forming limit A and the boundary flat surface of a forming limit B for which the coefficients in the expression (1) were determined and acquired as the boundary surfaces of a forming limit.

The coefficients in the expression (1) for the determined boundary flat surface of a forming limit A and boundary flat surface of a forming limit B are illustrated in Table 2. Furthermore, the boundary flat surface of a forming limit which surface was created on the basis of the determined coefficients and a plot of a forming limit strain for each of the measured bending deformation degrees are illustrated in FIG. 8.

Table 2

|  | a | b | c | d |
|---|---|---|---|---|
| Boundary flat surface of forming limit A | -21.27 | 41.69 | -17.82 | 1.00 |
| Boundary flat surface of forming limit B | 12.67 | 41.23 | -17.79 | 1.00 |

As described above, according to the method and the apparatus according to the present invention, as illustrated in FIG. 8, the boundary surface of a forming limit which surface is represented by the relationship among the bending deformation degree, the maximum principal strain, and the minimum principal strain could be acquired.

Industrial Applicability

According to the present invention, it is possible to provide a metal sheet forming limit acquisition method and apparatus capable of determining a forming limit of a metal sheet in consideration of an influence of bending deformation.

Reference Signs List

1 FORMING LIMIT ACQUISITION APPARATUS
10 FORMING TEST UNIT
11 MOLDING DIE
11a HEMISPHERICAL PUNCH
11a1 TIP PORTION
11b UPPER DIE
11c BLANK HOLDER
13 PHOTOGRAPHING DEVICE
15 STRAIN MEASUREMENT DEVICE
17 STRAIN DATABASE CONSTRUCTION DEVICE
20 FORMING LIMIT ANALYSIS UNIT
21 STRAIN DISTRIBUTION EXTRACTION DEVICE
23 FORMING LIMIT ACQUISITION DEVICE
30 BOUNDARY SURFACE OF FORMING LIMIT CREATION UNIT
31 FORMING LIMIT PLOTTING DEVICE
33 BOUNDARY SURFACE OF FORMING LIMIT CREATION DEVICE
41 MOLDING DIE
43 HEMISPHERICAL PUNCH
43a TIP PORTION
45 UPPER DIE
47 BLANK HOLDER
51 MOLDING DIE
53 FLAT PUNCH
53a TIP PORTION
55 UPPER DIE
57 BLANK HOLDER
100 TEST PIECE
101 TEST PIECE
103 TEST PIECE
103a CUT-OUT PORTION
103b CENTRAL PORTION
110 DRIVER SHEET

**Claims**

1. A metal sheet forming limit acquisition method comprising:

bulge forming a test piece of a metal sheet at various bending deformation degrees by using a plurality of hemispherical punches having different curvatures at tip portions; and

acquiring a forming limit of the metal sheet which limit is represented by a relationship between a bending deformation degree of the bulge-formed test piece and a maximum principal strain and a minimum principal strain of the test piece bulge-formed at the bending deformation degrees.

2. The metal sheet forming limit acquisition method according to claim 1, wherein the bending deformation degrees are expressed by the curvatures of the tip portions of the hemispherical punches.

3. A metal sheet forming limit acquisition method of acquiring a forming limit of a metal sheet in consideration of a bending deformation degree, the method comprising:

a forming test step; a forming limit analysis step; and a boundary surface of a forming limit creation step, wherein the forming test step includes

a test piece preparation process of preparing a test piece in which a predetermined grid or strain analysis pattern is applied to a surface of the metal sheet,
a bulge forming process of performing bulge forming of the test piece at various bending deformation degrees by using a plurality of hemispherical punches having different curvatures at tip portions while photographing a surface of the test piece provided with the grid or strain analysis pattern,
a strain measurement process of analyzing an image of the surface of the test piece photographed in the bulge forming process and measuring a strain generated in the test piece for each of the bending deformation degrees of the bulge-formed test piece, and
a strain database construction process of storing the strain measured for each of the bending deformation degrees of the bulge-formed test piece in time series from a start of forming to fracture, and of constructing a strain database,

the forming limit analysis step includes

a strain distribution extraction process of extracting, for each of the bending deformation degrees of the bulge-formed test piece, a strain distribution in a vicinity of a fracture generated portion of the test piece from the strain database, and
a forming limit acquisition process of acquiring, for each of the bending deformation degrees of the test piece, a forming limit strain represented by a maximum principal strain and a minimum principal strain at the fracture generated portion of the test piece from the extracted strain distribution, and

the boundary surface of a forming limit creation step includes

a forming limit plotting process of plotting the forming limit strain, which is acquired for each of the bending deformation degrees in the forming limit analysis step, in a three-dimensional coordinate space having three axes of the maximum principal strain, the minimum principal strain, and the bending deformation degree, and
a boundary surface of a forming limit creation process of creating, on a basis of the forming limit strain of each of the bending deformation degrees which strain is plotted in the three-dimensional coordinate space, a boundary surface of a forming limit which surface is represented by a relationship among the maximum principal strain, the minimum principal strain, and the bending deformation degree.

4. The metal sheet forming limit acquisition method according to claim 3, wherein in the boundary surface of a forming limit creation process, as the boundary surface of a forming limit, a polygonal surface including a plurality of triangular planes each of which connects two adjacent plots among plots of a forming limit strain group having a same bending deformation degree and one plot that has a shortest distance to a line segment connecting the two plots and that is among plots of a forming limit strain group having a bending deformation degree different from that of the two plots is created.

5. The metal sheet forming limit acquisition method according to claim 3, wherein in the boundary surface of a forming limit creation process,

a boundary flat surface of a forming limit or a boundary curved surface of a forming limit is assumed,
a sum of squares of a vertical distance between the assumed boundary flat surface of a forming limit or boundary curved surface of a forming limit and a plot of the forming limit strain for each of the bending deformation degrees in the three-dimensional coordinate space is acquired, and

the boundary surface of a forming limit is created by determination of the boundary flat surface of a forming limit or the boundary curved surface of a forming limit at which the acquired sum of squares is minimized.

6. The metal sheet forming limit acquisition method according to claim 3, wherein in the boundary surface of a forming limit creation process,

a boundary flat surface of a forming limit or a boundary curved surface of a forming limit is assumed,

a sum of squares in which a vertical distance between the assumed boundary flat surface of a forming limit or boundary curved surface of a forming limit and a plot of the forming limit strain for each of the bending deformation degrees in the three-dimensional coordinate space is weighted is acquired, and

the boundary surface of a forming limit is created by determination of the boundary flat surface of a forming limit or the boundary curved surface of a forming limit in such a manner that the acquired sum of squares is minimized.

7. The metal sheet forming limit acquisition method according to claim 5 or 6, wherein in the boundary surface of a forming limit creation process, the boundary surface of a forming limit is created by combination of a plurality of the boundary flat surfaces of a forming limit and boundary curved surfaces of a forming limit.

8. A metal sheet forming limit acquisition apparatus of acquiring a forming limit of a metal sheet in consideration of a bending deformation degree, the apparatus comprising:

a forming test unit; a forming limit analysis unit; and a boundary surface of a forming limit creation unit, wherein the forming test unit includes

a molding die that includes a plurality of hemispherical punches having different curvatures at tip portions, and performs bulge forming of a test piece of the metal sheet, to which a predetermined grid or strain analysis pattern is applied, at various bending deformation degrees by using the plurality of hemispherical punches,

a photographing device that photographs a surface of the test piece in a process of bulge forming the test piece with the molding die,

a strain measurement device that analyzes an image of the surface of the test piece photographed by the photographing device and measures a strain generated in the test piece for each of the bending deformation degrees, and

a strain database construction device that constructs a strain database storing the measured strain for each of the bending deformation degrees of the bulge-formed test piece in time series from a start of forming to fracture,

the forming limit analysis unit includes

a strain distribution extraction device that extracts, for each of the bending deformation degrees of the bulge-formed test piece, a strain distribution in a vicinity of a fracture generated portion of the test piece from the strain database, and

a forming limit acquisition device that acquires, for each of the bending deformation degrees of the test piece, a forming limit strain represented by a maximum principal strain and a minimum principal strain at the fracture generated portion of the test piece from the extracted strain distribution, and

the boundary surface of a forming limit creation unit includes
a forming limit plotting device that plots the forming limit strain, which is acquired for each of the bending deformation degrees by the forming limit analysis unit, in a three-dimensional coordinate space having three axes of the maximum principal strain, the minimum principal strain, and the bending deformation degree, and

a boundary surface of a forming limit creation device that creates a boundary surface of a forming limit, which surface is represented by a relationship among the maximum principal strain, the minimum principal strain, and the bending deformation degree, on a basis of the forming limit plotted in the three-dimensional coordinate space.

# FIG.1

| | |
|---|---|
| FORMING TEST STEP | S10 |
| TEST PIECE PREPARATION PROCESS | S11 |
| BULGE FORMING PROCESS | S13 |
| STRAIN MEASUREMENT PROCESS | S15 |
| STRAIN DATABASE CONSTRUCTION PROCESS | S17 |
| FORMING LIMIT ANALYSIS STEP | S20 |
| STRAIN DISTRIBUTION EXTRACTION PROCESS | S21 |
| FORMING LIMIT ACQUISITION PROCESS | S23 |
| BOUNDARY SURFACE OF FORMING LIMIT CREATION STEP | S30 |
| FORMING LIMIT PLOTTING PROCESS | S31 |
| BOUNDARY SURFACE OF FORMING LIMIT CREATION PROCESS | S33 |

# FIG.2

# FIG.3

101(100)

φ180mm

(a)

103(100)

103b

W60mm

103a    103a

(b)

103(100)

103b

W80mm

103a    103a

(c)

# FIG.4

1

| FORMING TEST UNIT | 10 |
| FORMING DEVICE | 11 |
| PHOTOGRAPHING DEVICE | 13 |
| STRAIN MEASUREMENT DEVICE | 15 |
| STRAIN DATABASE CONSTRUCTION DEVICE | 17 |

| FORMING LIMIT ANALYSIS UNIT | 20 |
| STRAIN DISTRIBUTION EXTRACTION DEVICE | 21 |
| FORMING LIMIT ACQUISITION DEVICE | 23 |

| BOUNDARY SURFACE OF FORMING LIMIT CREATION UNIT | 30 |
| FORMING LIMIT PLOTTING DEVICE | 31 |
| BOUNDARY SURFACE OF FORMING LIMIT CREATION DEVICE | 33 |

# FIG.5

```
┌─────────────────────────────────────────────────┐
│      FORMING TEST STEP              ～S10        │
│   ┌──────────────────────┐                      │
│   │ DETERMINE            │                      │
│   │ HEMISPHERICAL        │                      │
│   │ PUNCH SHAPE          │                      │
│   └──────────┬───────────┘                      │
│   ┌──────────▼───────────┐                      │
│   │ DETERMINE TEST PIECE │                      │
│   │ SHAPE                │                      │
│   └──────────┬───────────┘                      │
│   ┌──────────▼───────────┐                      │
│   │ TRANSFER TEST PIECE  │                      │
│   │ GRID                 │                      │
│   └──────────┬───────────┘                      │
│   ┌──────────▼───────────┐                      │
│   │ FORMING TEST         │                      │
│   │ (PHOTOGRAPHING)      │                      │
│   └──────────┬───────────┘                      │
│   ┌──────────▼───────────┐                      │
│   │ MEASURE STRAIN       │                      │
│   └──────────┬───────────┘                      │
│          ┌───▼───┐   NO                          │
│          │FRACTURE IS│                           │
│          │GENERATED  │                           │
│          └───┬───┘                               │
│            YES                                   │
│          ┌───▼───┐   NO                          │
│          │IS TEST PERFORMED│                     │
│          │ON ALL TEST PIECE│                     │
│          │SHAPE?           │                     │
│          └───┬───┘                               │
│            YES                                   │
│          ┌───▼───┐   NO                          │
│          │IS TEST PERFORMED│                     │
│          │FOR ALL          │                     │
│          │HEMISPHERICAL    │                     │
│          │PUNCH SHAPE?     │                     │
│          └───┬───┘                               │
│            YES                                   │
│   ┌──────────▼───────────┐                      │
│   │ END FORMING TEST     │                      │
│   │ STEP                 │                      │
│   └──────────────────────┘                      │
└─────────────────────────────────────────────────┘
```

STRAIN DATABASE

FORMING LIMIT ANALYSIS STEP ～S20
- SET EVALUATION POINT
- EXTRACT STRAIN
- ACQUIRE FORMING LIMIT
- END FORMING LIMIT ANALYSIS STEP

S30
BOUNDARY SURFACE OF FORMING LIMIT CREATION STEP
- EXTRACT FORMING LIMIT DATA
- APPROXIMATE BOUNDARY SURFACE OF FORMING LIMIT
- END BOUNDARY SURFACE OF FORMING LIMIT CREATION STEP

# FIG.6

11a
11a1

50mm    R25mm
R10mm
φ100mm

(a)

11a
11a1

R50mm
φ100mm

(b)

11a
11a1

R10mm
R100mm
φ100mm

(c)

# FIG.7

BENDING DEFORMATION DEGREE 0.04
BENDING DEFORMATION DEGREE 0.02
BENDING DEFORMATION DEGREE 0.01
BENDING DEFORMATION DEGREE 0.00

MAXIMUM PRINCIPAL STRAIN

MINIMUM PRINCIPAL STRAIN

# FIG.8

BENDING DEFORMATION DEGREE 0.04
BENDING FORMING DEGREE 0.02
BENDING DEFORMATION DEGREE 0.01
BENDING DEFORMATION DEGREE 0.00

BOUNDARY FLAT SURFACE OF FORMING LIMIT A

BOUNDARY FLAT SURFACE OF FORMING LIMIT B

MAXIMUM PRINCIPAL STRAIN

BENDING DEFORMATION DEGREE

MINIMUM PRINCIPAL STRAIN

# FIG.9

(a) NAKAJIMA TEST

(b) MARCINIAK TEST

(c) FORMING LIMIT DIAGRAM

FORMING
LIMIT CURVE OF
NAKAJIMA TEST

FORMING
LIMIT CURVE OF
MARCINIAK TEST

MAXIMUM PRINCIPAL STRAIN

MINIMUM PRINCIPAL STRAIN

# FIG.10

## INTERNATIONAL SEARCH REPORT

| International application No. |
| --- |
| **PCT/JP2023/009090** |

### A. CLASSIFICATION OF SUBJECT MATTER

*G01N 3/28*(2006.01)i; *B21D 22/00*(2006.01)i
FI: G01N3/28; B21D22/00

According to International Patent Classification (IPC) or to both national classification and IPC

### B. FIELDS SEARCHED

Minimum documentation searched (classification system followed by classification symbols)

G01N3/28; B21D22/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 2015-16481 A (JFE STEEL CORP) 29 January 2015 (2015-01-29) paragraphs [0001]-[0047], fig. 1-9 | 1 |
| Y | | 2 |
| A | | 3-8 |
| Y | JP 2012-166252 A (JFE STEEL CORP) 06 September 2012 (2012-09-06) paragraphs [0007], [0024]-[0035] | 2 |
| A | JP 2016-170165 A (NIPPON STEEL & SUMITOMO METAL CORP) 23 September 2016 (2016-09-23) entire text, all drawings | 1-8 |
| A | JP 2019-38005 A (KEYLEX CORP) 14 March 2019 (2019-03-14) entire text, all drawings | 1-8 |
| A | JP 2019-158415 A (UNIPRES CORP) 19 September 2019 (2019-09-19) entire text, all drawings | 1-8 |

☑ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **16 May 2023** | **30 May 2023** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

**EP 4 517 294 A1**

<table>
<tr><td colspan="3" style="text-align:center">INTERNATIONAL SEARCH REPORT</td><td colspan="2">International application No.<br><br>**PCT/JP2023/009090**</td></tr>
<tr><td colspan="5">C.     DOCUMENTS CONSIDERED TO BE RELEVANT</td></tr>
<tr><td>Category*</td><td colspan="3">Citation of document, with indication, where appropriate, of the relevant passages</td><td>Relevant to claim No.</td></tr>
<tr><td>A</td><td colspan="3">JP 2012-33039 A (NIPPON STEEL CORP) 16 February 2012 (2012-02-16)<br>    entire text, all drawings</td><td>1-8</td></tr>
<tr><td>A</td><td colspan="3">CN 111292813 A (CHINA NATIONAL PETROLEUM CORPORATION) 16 June 2020<br>(2020-06-16)<br>    entire text, all drawings</td><td>1-8</td></tr>
<tr><td>A</td><td colspan="3">CN 113128001 B (TONGJI UNIVERSITY) 16 July 2021 (2021-07-16)<br>    entire text, all drawings</td><td>1-8</td></tr>
<tr><td>A</td><td colspan="3">CN 109870362 B (YANSHAN UNIVERSITY) 11 June 2019 (2019-06-11)<br>    entire text, all drawings</td><td>1-8</td></tr>
</table>

Form PCT/ISA/210 (second sheet) (January 2015)

**INTERNATIONAL SEARCH REPORT**
**Information on patent family members**

International application No.

**PCT/JP2023/009090**

| Patent document cited in search report | | | Publication date (day/month/year) | Patent family member(s) | Publication date (day/month/year) |
|---|---|---|---|---|---|
| JP | 2015-16481 | A | 29 January 2015 | (Family: none) | |
| JP | 2012-166252 | A | 06 September 2012 | (Family: none) | |
| JP | 2016-170165 | A | 23 September 2016 | (Family: none) | |
| JP | 2019-38005 | A | 14 March 2019 | (Family: none) | |
| JP | 2019-158415 | A | 19 September 2019 | (Family: none) | |
| JP | 2012-33039 | A | 16 February 2012 | (Family: none) | |
| CN | 111292813 | A | 16 June 2020 | (Family: none) | |
| CN | 113128001 | B | 16 July 2021 | (Family: none) | |
| CN | 109870362 | B | 11 June 2019 | (Family: none) | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012166252 A

**Non-patent literature cited in the description**

- **W HOTZ** ; **M MERKLEIN et al.** Time Dependent FLC Determination Comparison of Different Algorithms to Detect the Onset of Unstable Necking before Fracture. *Key Engineering Materials*, 2013, vol. 549, 397-404